# EUROPEAN PATENT APPLICATION

(11) **EP 3 477 486 A1**
(43) Date of publication of application: **01.05.2019**
(21) Application number: 18151981.0
(22) Date of filing: 16.01.2018
(51) Int. Cl.: G06F 13/40, G06K 19/07

(54) **MEMORY CARD ADAPTER DEVICE IN THE CFEXPRESS TRANSMISSION INTERFACE**

(30) Priority: 31.10.2017 TW 106216141 U
(71) Applicant: Grandsky Engineering Limited, Central (HK)
(72) Inventor: Ebrahimi, Ahmad, 14167 Berlin (DE)
(74) Representative: Lang, Christian

(57) **Abstract**

A memory card adapter device in the CFexpress transmission interface includes primarily a housing, a CFexpress connection interface, at least a signal adapter and an all-in-one card reading control chip. An edge of the housing is provided at least with a rabbet for insertion of a memory card in a predetermined specification, so that the memory card in the predetermined specification (small memory card) can be inserted into the corresponding rabbet for positioning. The housing is then inserted into a CFexpress slot of an external device (such as a laptop computer, a tablet personal computer or a digital camera), and the object of connecting electrically at least a non-CFexpress memory card with the CFexpress transmission interface of the external device is achieved.

## Description

### BACKGROUND OF THE INVENTION

### a) Field of the Invention

The present invention relates to a memory card adapter device in the CFexpress transmission interface, and more particularly to a memory card adapter device in the CFexpress interface, which enables electric connection between a non-CFexpress memory card and the CFexpress transmission interface, thereby increasing the applicability of the CFexpress transmission interface and extending the usage of small memory cards in other specifications.

### b) Description of the Prior Art

An ordinary flash memory has been widely used in all kinds of electronic products, and there are a lot of memory cards using the flash memory now, usually including a CF (Compact Flash) card, an SD (Secure Digital) card, an MMC (MultiMedia Card) card and an SM (Smart Media) card. In recent years, there is even a memory card in the CFexpress format which is able to provide the throughput as high as 8 GB/s via the PCI (Peripheral Component Interconnect) Express interface.

As the function of a professional video device gets stronger and stronger, the 4K video device has already been used widely, and even an 8K video device has been applied in the high-end production area. A full HD (High Definition) TV production requires a more advanced digital format, such as RAW 4K @ 60 frames/s, and this will need a reliable and sustainable capacity of more than 700 MB/s. For the next generation of video application, such as the production of an 8K video or even a professional 360/VR (Virtual Reality) video, the video produced will have an astoundingly high throughput which exceeds the data recording ability of a conventional CFA (Compact Flash Association) card of about 600 MB/s, whereas this kind of application will be benefited from the new specification that supports the throughput as high as 2 GB/s.

Moreover, the desktop computer and the laptop computer are now moving toward using SSD (Solid State Disk), and abnormal start, application start and time searching are activated on the host computer. With the faster expansion in more matured cloud infrastructures, countless competitive cloud software services, servers and routers, more reliable and faster removable storage devices are needed, so that image files, some software functions and configuration files can be stored in the cloud infrastructures. In comparison with other small removable media, CFexpress 1.0 having the low-delay stacks and the NVM (Non-Volatile Memory) Express@ SMART commands on the host computer is superior in performance, reliability and observability.

There are currently a lot of digital electronic products using the CFexpress transmission interface (such as digital cameras, laptop computers or tablet personal computers), and when a consumer is purchasing a new digital electronic product using the CFexpress transmission interface, it is possible that the data stored in a small memory card cannot be accessed as the transmission interface of the small memory card is different from that of the CFexpress card. Therefore, the small memory card that was purchased before to fit with other digital electronic product may be idle, thereby causing the waste of resources.

### SUMMARY OF THE INVENTION

Accordingly, the primary object of the present invention is to provide a memory card adapter device in the CFexpress interface, which enables electric connection between small memory cards in plural kinds of specifications and the CFexpress transmission interface, thereby increasing the applicability of the CFexpress transmission interface and extending the usage of small memory cards in other specifications.

To achieve the abovementioned object, the memory card adapter device in the CFexpress transmission interface, according to the present invention, includes primarily a housing, a CFexpress connection interface, at least a signal adapter, and an all-in-one card reading control chip. The housing is provided with a profile in compliance with the specification of a CFexpress card mechanism, and an edge of the housing is provided at least with a rabbet for insertion of a non-CFexpress memory card. The CFexpress connection interface is disposed on a front end of the housing and is connected electrically with a CFexpress transmission interface in an external device. The signal adapter is disposed inside the housing and is connected electrically with a memory card which is inserted into the rabbet. The all-in-one card reading control chip is disposed inside the housing and is connected electrically between the CFexpress connection interface and the signal adapter, acting as an electronic signal control center between the external device and the memory card that is inserted into the rabbet.

More specifically, with the abovementioned features in the primary structures of the memory card adapter device in the CFexpress transmission interface, according to the present invention, a small memory card in a predetermined specification can be inserted into the corresponding rabbet for positioning, and then the housing is inserted into a CFexpress card slot of the external device (such as a laptop computer, a tablet personal computer or a digital camera), so that the inserted memory card can be connected electrically with the CFexpress transmission interface of the external device, which enables at least one non-CFexpress memory card to be connected electrically with the CFexpress transmission interface of the external device, thereby increasing the applicability of the CFexpress transmission interface and extending the usage of small memory cards in other specifications.

According to the abovementioned features in the primary structures, an interior of the housing is provided with a circuit board which is disposed between the CFexpress connection interface and the signal adapter, with the all-in-one card reading control chip being disposed on the circuit board.

According to the abovementioned features in the primary structures, the CFexpress connection interface is provided with a set of differential sequence pin to transmit an electronic signal to the external device, and a card detection pin to detect whether the memory card is inserted.

According to the abovementioned features in the primary structures, an edge on a rear end and an edge on a side of the housing are provided respectively with a rabbet.

The CFexpress connection interface includes at least a power pin to transmit a working voltage sent by the external device under the condition that the card detection pin is energized.

The all-in-one card reading control chip is provided at least with a set of system data transmission pin which is connected electrically with the differential sequence pin, and a first detection pin, a second detection pin, a third detection pin and a fourth detection pin to detect the type of the memory card inserted into each rabbet.

The all-in-one card reading control chip is provided at least with a set of system data transmission pin which is connected electrically with the differential sequence pin, and a first detection pin, a second detection pin, a third detection pin and a fourth detection pin to detect the type of the memory card inserted into each rabbet; whereas, the signal adapter is provided with a first card type detection pin, a second card type detection pin, a third card type detection pin, and a fourth card type detection pin, with that the first card type detection pin is connected electrically with the card detection pin and the first detection pin for the insertion of the first type of memory card, the second card type detection pin is connected electrically with the card detection pin and the second detection pin for the insertion of the second type of memory card, the third card type detection pin is connected electrically with the card detection pin and the third detection pin for the insertion of the third type of memory card, and the fourth card type detection pin is connected electrically with the card detection pin and the fourth detection pin for the insertion of the fourth type of memory card.

The first type of memory card includes a SmartMedia card, an xD card (eXtreme Digital), an XD type M card, or an xD type H card. The second type of memory card includes an MS (Memory Stick) card, an MS Pro card, an MS Pro HighSpeed card, an MS Pro Ultra II card, an MS Pro Extreme card, an MS Pro Extreme III card, an MS Duo card, an MS Duo HighSpeed card, an MS Pro Duo card, an MS Pro Duo HighSpeed card, an MS Pro Ultra card, an MS Pro Duo Ultra II card, an MS Duo ROM (Read-Only Memory) card, an MS Pro Duo MARK2 card, an MS Pro-HG Duo HX card, an MS Pro-HG Duo card, or an MS Pro-HG Duo Ultra card. The third type of memory card includes an SD card, an SD Pro card, an SD Plus card, an SD Ultra card, an SD Gaming card, an SD Extreme card, an SD High Capacity (SDHC) card, an SDHC Ultra card, an SDHC Extreme card, an SDXC (Secure Digital eXtended Capacity) card, an SDXC Ultra card, an MMC-I card, an MMC-II card, an HS-MMC (High Speed MultiMedia Card) card, an MMC Plus card, a Mini SD card, a Mini SDHC card, an MMCmobile card, an MMC Micro card, an RS-MMC (Reduced Size Multimedia Card) card, an RS-MMC 4.0 card, an RS-MMC HS card, or a DV (Dual Voltage) RS MMC card. Finally, the fourth type of memory card includes a MicroSD card, a Micro SDHC card, a Micro SDHC Ultra card, a T-Flash card, an MMCmicro card, or an MS Micro (M2) card.

The CFexpress connection interface uses a PCI Express interface as the operation interface.

To enable a further understanding of the said objectives, the features and the advantages of the invention herein, the brief description of the drawings below is followed by the detailed description of two preferred embodiments. As far as it is referred to the CF express standard, the version 1.0 is considered.

### BRIEF DESCRIPTION OF THE DRAWINGS

FIG. 1 shows a three-dimensional front view of a memory card adapter device in the CFexpress transmission interface, according to the present invention.
FIG. 2 shows a circuit diagram of the memory card adapter device in the CFexpress transmission interface, according to the present invention.
FIG. 3 shows a three-dimensional schematic view of appearance of the memory card adapter device in the CFexpress transmission interface, according to the present invention, along another view angle.
FIG. 4 shows a schematic view of use of the memory card adapter device in the CFexpress transmission interface, according to the present invention.

### DETAILED DESCRIPTION OF THE PREFERRED EMBODIMENTS

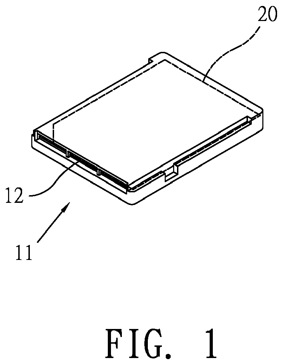

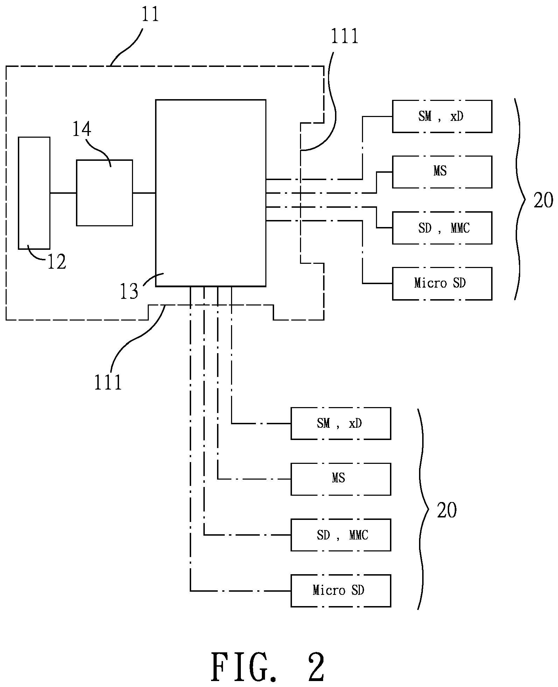

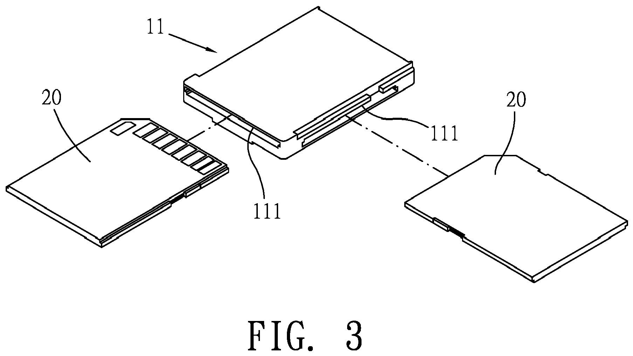

Referring to FIGS. 1 to 3, a memory card adapter device in the CFexpress interface, according to the present invention, comprises primarily a housing 11, a CFexpress connection interface 12, at least a signal adapter 13, and an all-in-one card reading control chip 14.

The housing 11 is provided with a profile in compliance with the specification of a CFexpress card mechanism, and an edge of the housing 11 is provided at least with a rabbet 111 for insertion of a memory card in a predetermined specification 20 (non-CFexpress memory card). Upon implementation, the housing 11 can be as shown in the drawings that an edge on a rear end and an edge on a side are provided respectively with a rabbet 111.

The CFexpress connection interface 12 is disposed on a front end of the housing 11 and is connected electrically with a CFexpress transmission interface of an external device (such as a digital camera, a laptop computer or a tablet personal computer). Upon implementation, the CFexpress connection interface 12 uses a PCI Express interface as the operation interface, and the CFexpress connection interface can be further provided with a set of differential sequence pin to transmit an electronic signal to the external device, a card detection pin to detect whether a memory card is inserted, and at least a power pin to transmit a working voltage sent by the external device under the condition that the card detection pin is energized.

The signal adapter 13 is disposed inside the housing 11 and is connected electrically with the memory card 20 that is inserted into the rabbet 111.

The all-in-one card reading control chip 14, on the other hand, is disposed inside the housing 11, and is connected electrically between the CFexpress connection interface 12 and the signal adapter 13 to act as an electronic signal control center between the external device and the memory card 20 that is inserted into the rabbet 111. Upon implementation, an interior of the housing 11 can be provided with a circuit board which is disposed between the CFexpress connection interface 12 and the signal adapter 13, and the all-in-one card reading control chip 14 can be disposed selectively on a top surface or a bottom surface of the circuit board.

Moreover, the all-in-one card reading control chip 14 can be further provided at least with a set of system data transmission pin which is connected electrically with the differential sequence pin, and a first detection pin, a second detection pin, a third detection pin, and a fourth detection pin to detect the type of memory card that is inserted into each rabbet 111.

In addition, the all-in-one card reading control chip 14 is provided at least with a set of system data transmission pin which is connected electrically with the differential sequence pin, and a first detection pin, a second detection pin, a third detection pin, and a fourth detection pin to detect the type of memory card that is inserted into each rabbet 111; whereas, the signal adapter 13 is collaboratively provided with a first card type detection pin, a second card type detection pin, a third card type detection pin, and a fourth card type detection pin, with that the first card type detection pin is connected electrically with the card detection pin and the first detection pin for the insertion of the first type of memory card, the second card type detection pin is connected electrically with the card detection pin and the second detection pin for the insertion of the second type of memory card, the third card type detection pin is connected electrically with the card detection pin and the third detection pin for the insertion of the third type of memory card, and the fourth card type detection pin is connected electrically with the card detection pin and the fourth detection pin for the insertion of the fourth type of memory card.

The first type of memory card can be a SmartMedia card, an xD card (eXtreme Digital), an XD type M card, or an xD type H card. The second type of memory card can be an MS (Memory Stick) card, an MS Pro card, an MS Pro HighSpeed card, an MS Pro Ultra II card, an MS Pro Extreme card, an MS Pro Extreme III card, an MS Duo card, an MS Duo HighSpeed card, an MS Pro Duo card, an MS Pro Duo HighSpeed card, an MS Pro Ultra card, an MS Pro Duo Ultra II card, an MS Duo ROM (Read-Only Memory) card, an MS Pro Duo MARK2 card, an MS Pro-HG Duo HX card, an MS Pro-HG Duo card, or an MS Pro-HG Duo Ultra card. The third type of memory card can be an SD card, an SD Pro card, an SD Plus card, an SD Ultra card, an SD Gaming card, an SD Extreme card, an SD High Capacity (SDHC) card, an SDHC Ultra card, an SDHC Extreme card, an SDXC (Secure Digital eXtended Capacity) card, an SDXC Ultra card, an MMC-I card, an MMC-II card, an HS-MMC (High Speed MultiMedia Card) card, an MMC Plus card, a Mini SD card, a Mini SDHC card, an MMCmobile card, an MMC Micro card, an RS-MMC (Reduced Size Multimedia Card) card, an RS-MMC 4.0 card, an RS-MMC HS card, or a DV (Dual Voltage) RS MMC card. Finally, the fourth type of memory card can be a MicroSD card, a Micro SDHC card, a Micro SDHC Ultra card, a T-Flash card, an MMCmicro card, or an MS Micro (M2) card.

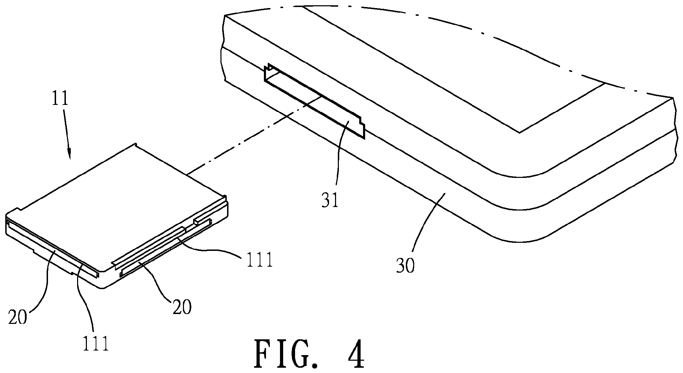

In principle, upon using the present invention as shown in FIG. 4, the memory card in a predetermined specification (small memory card) 20 is inserted into the corresponding rabbet 111 for positioning, and then the housing 11 is inserted into a CFexpress card slot 31 of an external device 30 (such as a laptop computer, a tablet personal computer or a digital camera), allowing the inserted memory card 20 to be connected electrically with the CFexpress transmission interface of the external device 30 that the external device 30 is able to read data in the inserted memory card 20 and write data to the inserted memory card 20, achieving the object of connecting electrically plural non-CFexpress memory cards with the CFexpress transmission interfaces of the external devices via various rabbets.

Furthermore, at least two memory cards can be connected electrically with the CFexpress transmission interfaces of the external devices via various rabbets at a same time, which can increase the applicability of the CFexpress transmission interface, and can extend the usage of small memory cards in other specifications to increase the applicability of the memory cards, thereby avoiding the unnecessary waste of resources.

## Claims

1. A memory card adapter device in the CFexpress transmission interface, comprising a housing 11, a CFexpress connection interface 12, a signal adapter 13, and an all-in-one card reading control chip 14, wherein the housing 11 is provided with a profile in compliance with specification of a CFexpress card mechanism and an edge of the housing 11 is provided with a rabbet 111 for insertion of a non-CFexpress memory card 20, the CFexpress connection interface 12 is disposed on a front end of the housing 11 and is connected electrically with the CFexpress transmission interface of an external device 30, the signal adapter 13 is disposed inside the housing 11 and is connected electrically with the memory card 20 that is inserted into the rabbet 111, and the all-in-one card reading control chip 14 is disposed inside the housing 11 and is connected electrically between the CFexpress connection interface 12 and the signal adapter 13, acting as an electronic signal control center between the external device 30 and the memory card 20 that is inserted into the rabbet 111.

2. The memory card adapter device in the CFexpress transmission interface, according to claim 1, wherein an interior of the housing 11 is provided with a circuit board which is disposed between the CFexpress connection interface 12 and the signal adapter 13, and the all-in-one card reading control chip 14 is disposed on the circuit board.

3. The memory card adapter device in the CFexpress transmission interface, according to claim 1, wherein the CFexpress connection interface 12 is provided with a set of differential sequence pin to transmit an electronic signal to the external device 30, and a card detection pin to detect whether a memory card 20 is inserted.

4. The memory card adapter device in the CFexpress transmission interface, according to claim 1, wherein an edge on a rear end and an edge on a side of the housing 11 are provided respectively with a rabbet 111.

5. The memory card adapter device in the CFexpress transmission interface, according to claim 3, wherein the CFexpress connection interface 12 includes a power pin to transmit a working voltage sent by the external device 30 under the condition that the card detection pin is energized.

6. The memory card adapter device in the CFexpress transmission interface, according to claim 1, 2, 3 or 4, wherein the all-in-one card reading control chip 14 is provided with a set of system data transmission pin which is connected electrically with the differential sequence pin, and a first detection pin, a second detection pin, a third detection pin, and a fourth detection pin to detect the type of memory card that inserted into each rabbet 111.

7. The memory card adapter device in the CFexpress transmission interface, according to claim 1, 2, 3 or 4, wherein the all-in-one card reading control chip 14 is provided with a set of system data transmission pin which is connected electrically with the differential sequence pin, and a first detection pin, a second detection pin, a third detection pin, and a fourth detection pin to detect the type of memory card that inserted into each rabbet; whereas, the signal adapter is provided with a first card type detection pin, a second card type detection pin, a third card type detection pin, and a fourth card type detection pin, with that the first card type detection pin is connected electrically with the card detection pin and the first detection pin for the insertion of the first type of memory card, the second card type detection pin is connected electrically with the card detection pin and the second detection pin for the insertion of the second type of memory card, the third card type detection pin is connected electrically with the card detection pin and the third detection pin for the insertion of the third type of memory card, and the fourth card type detection pin is connected electrically with the card detection pin and the fourth detection pin for the insertion of the fourth type of memory card.

8. The memory card adapter device in the CFexpress transmission interface, according to claim 7, wherein the first type of memory card includes a SmartMedia card, an xD (eXtreme Digital) card, an XD type M card, or an xD type H card; the second type of memory card includes an MS (Memory Stick) card, an MS Pro card, an MS Pro HighSpeed card, an MS Pro Ultra II card, an MS Pro Extreme card, an MS Pro Extreme III card, an MS Duo card, an MS Duo HighSpeed card, an MS Pro Duo card, an MS Pro Duo HighSpeed card, an MS Pro Ultra card, an MS Pro Duo Ultra II card, an MS Duo ROM (Read-Only Memory) card, an MS Pro Duo MARK2 card, an MS Pro-HG Duo HX card, an MS Pro-HG Duo card, or an MS Pro-HG Duo Ultra card; the third type of memory card includes an SD (Secure Digital) card, an SD Pro card, an SD Plus card, an SD Ultra card, an SD Gaming card, an SD Extreme card, an SDHC (Secure Digital High Capacity) card, an SDHC Ultra card, an SDHC Extreme card, an SDXC (Secure Digital eXtended Capacity) card, an SDXC Ultra card, an MMC-I card, an MMC-II card, an HS-MMC (High Speed MultiMedia Card) card, an MMC Plus card, a Mini SD card, a Mini SDHC card, an MMCmobile card, an MMC Micro card, an RS-MMC (Reduced Size Multimedia Card) card, an RS-MMC 4.0 card, an RS-MMC HS card, or a DV (Dual Voltage) RS MMC card; and the fourth type of memory card includes a MicroSD card, a Micro SDHC card, a Micro SDHC Ultra card, a T-Flash card, an MMCmicro card, or an MS Micro (M2) card.

9. The memory card adapter device in the CFexpress transmission interface, according to claim 1, 2, 3 or 4, wherein the CFexpress connection interface 12 uses a PCI (Peripheral Component Interconnect) Express interface as an operation interface.
